# EUROPÄISCHE PATENTSCHRIFT

(11) **EP 3 448 547 B1**
(45) Veröffentlichungstag und Bekanntmachung des Hinweises auf die Patenterteilung: **01.04.2020**
(21) Anmeldenummer: 17721592.8
(22) Anmeldetag: 27.04.2017
(51) Int. Cl.: B01D 53/50, F23J 15/00, F26B 3/12

(54) **VERFAHREN ZUM ABWASSERFREIEN BETRIEB EINER NACH EINEM NASSVERFAHREN ARBEITENDEN RAUCHGASENTSCHWEFELUNGSANLAGE EINES DAMPFKRAFTWERKES SOWIE EIN DAMPFKRAFTWERK**
METHOD FOR THE WASTE-WATER-FREE OPERATION OF A WET-OPERATION FLUE GAS DESULFURIZATION PLANT OF A STEAM POWER PLANT, AND STEAM POWER PLANT
PROCÉDÉ POUR FAIRE FONCTIONNER SANS GÉNÉRER D'EAUX USÉES UNE INSTALLATION DE DÉSULFURISATION DE GAZ DE FUMÉE FONCTIONNANT SELON UN PROCÉDÉ HUMIDE D'UNE CENTRALE THERMIQUE À VAPEUR ET CENTRALE À VAPEUR APPROPRIÉE

(30) Priorität: 29.04.2016 DE 102016108047
(43) Veröffentlichungstag der Anmeldung: 06.03.2019
(73) Patentinhaber: Mitsubishi Hitachi Power Systems Europe GmbH, 47059 Duisburg (DE)
(72) Erfinder: BUDDENBERG, Torsten, 47447 Moers (DE); VOLLMER, Bernd, 47800 Krefeld (DE); STEIN-BRZOZOWSKA, Malgorzata, 47057 Duisburg (DE); MAJID, Muhammad, 47226 Duisburg (DE); BERGINS, Christian, 45711 Datteln (DE)
(74) Vertreter: Viering, Jentschura & Partner mbB Patent- und Rechtsanwälte
(86) Internationale Anmeldenummer: PCT/EP2017/060097
(87) Internationale Veröffentlichungsnummer: WO 2017/186865

(56) Entgegenhaltungen:
- WO-A1-2006/030398
- JP-A- H09 313 881
- US-A- 4 322 393
- US-A1- 2014 045 131
- US-A1- 2015 375 166

## Beschreibung

Die Erfindung richtet sich auf ein Verfahren zum abwasserfreien Betrieb einer in den Rauchgasstrom eines fossil befeuerten Dampferzeugers oder Kessels eines Dampfkraftwerkes eingebundenen, nach einem Nassverfahren arbeitenden Rauchgasentschwefelungsanlage, deren Abwasser in einem Sprühtrockner mittels durch einen Gasstrom bereitgestellter Wärmeenergie in Form eines zugeführten heißen, eine für die Verdampfung des Abwassers ausreichende Temperatur aufweisenden Luftstroms verdampft wird, wobei der sich im Sprühtrockner bildende feststoffbeladene Luft/Wasser-Gasstrom einem dem Sprühtrockner nachgeschalteten Feststoffabscheider zugeführt und dort der im Luft/Wasser-Gasstrom enthaltene Feststoffanteil abgeschieden wird.

Ebenso richtet sich die Erfindung auf ein Dampfkraftwerk, umfassend eine fossilbefeuerten Dampferzeuger oder Kessel mit einem dessen Rauchgasstrom führenden Rauchgasstrang oder Rauchgaskanal, der in Rauchgasströmungsrichtung nacheinander angeordnet vorzugsweise einen Luftvorwärmer, einen Elektrofilter und eine nach einem Nassverfahren arbeitende Rauchgasentschwefelungsanlage sowie einen den gereinigten Abgasstrom abführenden Kamin aufweist, und mit dem Dampferzeuger oder Kessel Verbrennungsluft in Form von erhitzter Primär-, Sekundär- und/oder Tertiärluft zuführenden Leitungen sowie mit einem das Abwasser der Rauchgasentschwefelungsanlage verdampfenden Sprühtrockner, wobei der Sprühtrockner eine einen heißen, das Abwasser im Sprühtrockner verdampfenden Luftstrom zuführende Leitungsverbindung aufweist, die mit einer oder mehreren Wärmequelle(n) in Leitungsverbindung steht, welche die für die Erhitzung des Luftstroms auf eine für die Verdampfung des Abwassers ausreichende Temperatur notwendige Wärmeenergiemenge bereitstellt/bereitstellen und wobei das Dampfkraftwerk einen Feststoffabscheider aufweist, der in einer den im Sprühtrockner beim Verdampfen des Abwassers mit dem zugeführten heißen Luftstrom gebildeten Luft/Wasser-Gasstrom zuführenden Leitungsverbindung mit dem Sprühtrockner steht.

Zur Entfernung von Schwefel aus dem Rauchgas fossilbefeuerter Dampferzeuger oder Dampfkessel von Kraftwerken werden häufig nach einem Nassverfahren arbeitende Rauchgasentschwefelungsanlagen eingesetzt. Bei diesen Anlagen wird häufig in Sprühwäschern eine kalkhaltige Suspension in Sprühebenen dem Rauchgas zugeführt, so dass der Schwefel entfernt wird. Im Sumpf eines solchen Kalkwäschers bildet sich dann Gips. Außerdem fällt ein Abwasser an, das vor allem die löslichen Bestandteile, insbesondere Chloride und Schwermetallverbindungen, aus dem Brennstoff und aus dem Absorptionsmittel enthält. Dieses Abwasser muss vor der Einleitung in Gewässer gereinigt werden. In vielen Ländern sind derzeit Emissionsrichtlinien in der Diskussion oder bereits in Kraft, die die Chloridgehalte des letztendlich in das Gewässer entlassenen gereinigten Abwassers auf sehr niedrige Grenzwerte festlegen. Das Erreichen dieser Grenzwerte erfordert teure und aufwändige Abwasserreinigungsanlagen. Aus diesem Grund sind daher auch schon Verfahren entwickelt worden, die insofern einen abwasserfreien Betrieb einer nach einem Nassverfahren arbeitenden Rauchgasentschwefelungsanlage ermöglichen, indem das mit den löslichen Bestandteilen, insbesondere Chloriden, versehene Abwasser verdampft und in Dampfform einer Weiterbehandlung zugeführt wird. In diesem Sinne ist im Rahmen der vorstehenden und nachfolgenden Beschreibung der Begriff eines abwasserfreien Betriebes einer nach einem Nassverfahren arbeitenden Rauchgasentschwefelungsanlage zu verstehen.

Zur Verdampfung des aus einer Rauchgaswäsche einer Rauchgasentschwefelungsanlage stammenden Abwassers ist es aus der Praxis bekannt, das mit Salzen (Chloriden) belastetet Abwasser in einem der Rauchgasentschwefelungsanlage zugeordneten externen Verdampfer, der mit aus dem Dampfkreislauf des zugeordneten Dampfkraftwerkes stammendem Anzapfdampf beheizt wird, zu verdampfen.

Es ist aber auch bekannt, zur Verdampfung des belasteten Abwassers die Rauchgaswärme des zugeordneten Dampfkraftwerkes zu nutzen, wobei bei Bedarf zusätzlich eine Feststoffabscheidung ergänzend vorgesehen sein kann.

So ist aus der CN 101844819 B die Einleitung des von einer Rauchgaswäsche einer Rauchgasentschwefelungsanlage stammenden Abwassers in den vom Dampferzeuger oder Kessel des Dampfkraftwerkes kommenden Rauchgasstrom bekannt. Hierbei wird das Abwasser in Rauchgasströmungsrichtung nach oder stromabwärts eines üblichen Luftvorwärmers und vor oder stromaufwärts eines Elektrofilters in den Rauchgasstrom eingedüst und verdampft. Diese Vorgehensweise ist auch als "Waistwater Evaporation System (WES)" bekannt. Bei diesem Verfahren wird das bei der Verdampfung im Rauchgasstrom auskristallisierende Salz zusammen mit der im Rauchgasstrom enthaltenen Flugasche im Elektrofilter aufgefangen. Hierbei steigt die Chloridkonzentration in der im Elektrofilter abgeschiedenen Asche aber allerdings soweit an, dass eine kommerzielle Verwendung der Flugasche nicht mehr möglich ist. Zudem ist es bei diesem Verfahren notwendig, dass ein ca. 30 m langer und gerader Rauchgaskanal im Bereich der Abwassereindüsung vorhanden ist, um ein Anbacken der entstehenden Salze an den Innenwänden des Rauchgaskanals zu verhindern und ein restloses Trocknen zu gewährleisten.

Es ist daher auch schon vorgeschlagen worden, einen Sprühtrockner zur Abwasserverdampfung im Bypass zum Luftvorwärmer in den Rauchgaskanal und die Rauchgasbehandlung zu integrieren. Bei diesem als "Waistwater Spray Drying (WSD)" bezeichneten System wird das Abwasser einem Sprühtrockner zugeführt und hier in einen vom Hauptrauchgasstrom des Kraftwerks abgezweigten Rauchgasteilstrom gesprüht. Anschließend wird das sich bildende Rauchgas/Wassergemisch wieder dem Hauptrauchgasstrom zugeführt. Ein solches Verfahren und ein solches Kraftwerk sind aus der EP 2 689 821 A1 und der EP 2 689 822 A1 bekannt. Diese Dokumente offenbaren zudem verschiedene Positionen, an welchen jeweils ein Teilrauchgasstrom von dem Hauptrauchgasstrom abgezweigt und nach Durchströmen des abwasserverdampfenden Sprühtrockners dem Hauptrauchgasstrom wieder zugeführt wird. So können die Entnahme- und Wiederzuführstellen in Rauchgasströmungsrichtung auch hinter dem Lufterwärmer und vor einem Elektrofilter oder auch nach dem Elektrofilter ausgebildet sein. Nachteilig bei diesen Verfahren ist, dass durch die Abzweigung eines Teilstromes des Rauchgases und dessen spätere Wiedereinführung in den Hauptgasstrom mit einer gegenüber dem Hauptrauchgasstrom erhöhten Temperatur in die Temperaturführung des Hauptrauchgasstromes eingegriffen wird. Wird der Rauchgasteilstrom beispielsweise in Rauchgasströmungsrichtung vor dem Luftvorwärmer abgezweigt, stellt sich am Luftvorwärmerausgang eine Rauchgastemperatur ein, die gegenüber einer sich sonst im üblichen Normalbetrieb einstellenden Rauchgastemperatur niedriger ist. Dies kann insbesondere im Winter aufgrund der dann geringeren Umgebungslufttemperatur zu einer Säurekondensation führen. Diese Rauchgastemperaturabsenkung am Luftvorwärmerausgang kommt am stärksten bei Teillast-Fahrweise des Dampferzeugers zum Tragen, da in diesem Fall dann weniger Rauchgas zum Vorwärmen der in diesem regenerativen Luftvorwärmer in der Regel im Gegenstrom geführten Luft zur Verfügung steht. Wird der Teilrauchgasstrom in Rauchgasströmungsrichtung erst nach dem Luftvorwärmer abgezweigt, so liegt dann eine deutlich niedrigere Rauchgastemperatur vor, die für die Verdampfung des Abwassers im Sprühtrockner genutzt werden kann. Noch mehr trifft dies für den Fall zu, dass die Abzweigung des Teilrauchgasstromes in Rauchgasströmungsrichtung erst nach dem Elektrofilter erfolgten sollte. Zudem besteht das Problem, dass mit dem abgezweigten Teilrauchgasstrom auch immer Flugasche mitgeführt wird, die dann dem Sprühtrockner zugeführt wird. Die bei der Verdampfung des Abwassers entstehenden Salze sind somit nie flugaschefrei, so dass das entstehende Salz einer kommerziellen Nutzung nicht zugeführt werden kann.

Ein gattungsgemäßes Verfahren und ein gattungsgemäßes Dampfkraftwerk sind aus der WO 2006/030398 A1 bekannt. Dieses Dokument offenbart eine Rauchgasreinigungsanlage, bei der das von einem Kessel eines mit fossilen Brennstoffen befeuerten Kraftwerks kommende Rauchgas zunächst in einem Luftvorwärmer gekühlt, anschließend in einem Elektrofilter gereinigt und mittels eines Absorbers in einem Nassverfahren entschwefelt wird. Nach dem Abscheiden von Gips aus dem den Absorber verlassenden Schlicker wird das erhaltene Abwasser mithilfe eines Teilstroms der im Luftvorwärmer vorgeheizten Verbrennungsluft, insbesondere Sekundärluft, in einem Sprüh-Verdampfer bei ca. 150° C verdampft. Aus der Abwasserverdampfung wird mit einem Restprodukt beladene Luft einem Partikelabscheider zugeführt, worin das getrocknete Produkt abgeschieden wird. Die den Partikelabscheider verlassende heiße Luft wird dem aus dem Absorber austretenden, feuchten und gereinigten Rauchgas zu dessen Wiedererwärmung beigemischt und über einen Kamin ausgelassen.

Der Erfindung liegt daher die Aufgabe zugrunde, eine Lösung zu schaffen, die eine gegenüber den bekannten Verfahren verbesserte und energetisch günstigere Einbindung einer Abwasserverdampfung in ein Dampfkraftwerk ermöglicht, ohne dass bei der Abwasserverdampfung entstehende Salze flugaschekontaminiert sind.

Bei einem Verfahren der eingangs näher bezeichneten Art wird diese Aufgabe erfindungsgemäß dadurch gelöst, dass der Luft/Wasser-Gasstrom nach dem Verlassen des Feststoffabscheiders dem Dampferzeuger oder Kessel zugeführt wird.

Bei einem Dampfkraftwerk der eingangs näher bezeichneten Art wird diese Aufgabe erfindungsgemäß dadurch gelöst, dass der Feststoffabscheider eine den feststoffbefreiten oder feststoffarmen Luft/Wasser-Gasstrom dorthin führende Leitungsverbindung zu dem den Brennern des Dampferzeugers oder Kessels und/oder einer Kohlemühle Verbrennungsluft zuführenden Verbrennungsluftstrom aufweist.

Vorteilhafte Ausgestaltungen und zweckmäßige Weiterbildungen sind Gegenstand der jeweiligen Unteransprüche.

Erfindungsgemäß ist also vorgesehen, dass die Verdampfung des aus einer nach einem Nassverfahren arbeitenden Rauchgasentschwefelungsanlage, vorzugsweise einem Sprühwäscher, zugeführten Abwassers mittels eines Heißluftstromes erfolgt. Der Heißluftstrom ist flugaschefrei, so dass die sich bei der Verdampfung bildenden Salze nicht durch Flugasche kontaminiert werden und daher einer kommerziellen Nutzung - gegebenenfalls nach einer entsprechenden Aufbereitung - zugeführt werden können. Zudem ist es für die Erzeugung eines heißen Luftstromes nicht notwendig, den vom Dampferzeuger oder Kessel des Dampfkraftwerkes ausgestoßenen Rauchgasstrom gegenüber der sonst üblichen Fahrweise zu verändern. Dem insbesondere bezüglich seines Rauchgasmassenstromes unveränderten Rauchgasstrom wird an der vorgesehenen Zuführungsstelle das in dem Sprühtrockner gebildete Luft/Wasser-Gasgemisch zugeführt. Hier trifft dieses Luft/Wasser-Gasgemisch auf einen bezüglich seines Volumenstroms oder Massenstroms unveränderten Rauchgasstrom und hat daher einen weniger kühlenden Effekt, als dies bei dem Verfahren nach dem Stand der Technik der Fall ist. Bei den bekannten Verfahren nach dem Stand der Technik wird bekanntlich ein Teilrauchgasstrom abgezweigt und dieser Teilrauchgasstrom wird dann zusammen mit den beim Verdampfen im Sprühtrockner entstehenden zusätzlichen Gasanteilen dem um den vorher abgezweigten Teilgasstrom verminderten Rauchgasstrom zugeführt, so dass hier die Temperatur beeinflussende Wirkung eine ungünstigere als beim erfindungsgemäßen Verfahren ist. Beim Stand der Technik triff der dem Rauchgasstrom zugeführte Luft/Wasser-Gasstrom auf einen kleineren Rauchgasmassenstrom als bei dem erfindungsgemäßen Verfahren. Insbesondere sind beim erfindungsgemäßen Verfahren keine Beeinflussungen der Temperaturverhältnisse am Luftvorwärmer zu befürchten, da die für die Verdampfung des Abwassers im Sprühtrockner bei Einsatz eines Luftvorwärmers als Wärmequelle für die Erwärmung des heißen Luftstroms verwendete Luft nach dem Durchströmen des Luftvorwärmers von dem Verbrennungsluftstrom abgezweigt werden kann und vorteilhafter Weise auch abgezweigt wird. Insgesamt ist aber auch die energetische Einbindung in ein Dampfkraftwerk verbessert, da, gegebenenfalls in Abhängigkeit vom jeweiligen Lastfall, die Aufheizung des erhitzten Luftstromes auch mittels aus dem Wasser/DampfKreislauf des Dampfkraftwerkes abgezweigten Anzapfdampfes erfolgen kann. Insgesamt führen sowohl des erfindungsgemäße Verfahren als auch das erfindungsgemäße Dampfkraftwerk im Hinblick auf die Energienutzung, die Stabilität des Wasser/Dampf-Kreislaufes und anderer im Wasser/Dampf-Kreislauf oder im Rauchgasstrom vorgesehener Wärmetauscher zu einer verbesserten Einbindung der Sprühtrocknung von bei einer Rauchgasentschwefelung entstehendem Abwasser in das Kraftwerk. Es wird bei der Abwasserverdampfung ein reines Salzgemisch ohne Flugasche erhalten, welches beispielsweise als Zuschlagstoff für Streusalz einer kommerziellen Verwendung zugeführt werden kann. Es entstehen keine kritischen, d.h. zu niedrigen, unter den Säuretaupunkt fallende, Temperaturniveaus von < 120 °C hinter dem regenerativen Luftvorwärmer. Zudem bleibt die Flugasche von dem Verdampfungsprozess im Sprühtrockner unbeeinflusst, so dass sich keine Auswirkungen auf die Flugaschenqualität ergeben.

Um das sich bei der Verdampfung des Abwassers in dem Sprühtrockner bildende Luft/Wasser-Gasgemisch von Feststoffen zu befreien und insbesondere die darin enthaltenen Salze gewinnen zu können, ist es erfindungsgemäß von Vorteil, dass der sich im Sprühtrockner bildende feststoffbeladene Luft/Wasser-Gasstrom einem dem Sprühtrockner nachgeschalteten Feststoffabscheider zugeführt und der im Luft/Wasser-Gasstrom enthaltene Feststoffanteil abgeschieden wird.

Durch eine Rückführung des bei der Verdampfung des Abwassers im Sprühtrockner entstehenden Luft/Wasser-Gasstroms in den Rauchgasstrom, sei es dadurch, dass erfindungsgemäß der Luft/Wasser-Gasstrom dem Dampferzeuger oder Kessel, insbesondere der dort zugeführten Verbrennungsluft, zugeführt wird, oder sei es auch dadurch, dass der Luft/Wasser-Gasstrom unmittelbar dem Rauchgasstrom oder dem Rauchgaskamin zugeführt wird, lässt sich der Gesamtwasserdampfanteil im Rauchgas um ca. 10 Gew.-% erhöhen. Hierbei ist es allerdings zweckmäßig, dass der Luft/Wasser-Gasstrom vor seiner Rückführung in den Rauchgasstrom oder den Dampferzeuger von seiner Salzbeladung befreit wird. Die Erhöhung des Gesamtwasserdampfanteils im Rauchgas lässt sich erfindungsgemäß dadurch erreichen, dass der Luft/Wasser-Gasstrom nach dem Verlassen des Feststoffabscheiders dem Dampferzeuger oder Kessel zugeführt wird.

Um aus dem bei der Verdampfung des Abwassers in dem Sprühtrockner entstehenden Luft/Wasser-Gasgemisch die entstehenden Salze herausfiltern zu können, ist insbesondere ein Feststoffabscheider besonders gut geeignet. Das Dampfkraftwerk weist daher erfindungsgemäß einen Feststoffabscheider auf, der in einer den im Sprühtrockner beim Verdampfen des Abwassers mit dem zugeführten heißen Luftstrom gebildeten Luft/Wasser-Gasstrom zuführenden Leitungsverbindung mit dem Sprühtrockner steht.

Der in dem Feststoffabscheider von mitgeführten Feststoffen befreite Luft/Wasser-Gasstrom lässt sich in vorteilhafter Weise dem zur Verbrennung des fossilen Brennstoffes genutzten Verbrennungsluftstrom zumischen. Die Erfindung zeichnet sich in Bezug auf das Dampfkraftwerk daher dadurch aus, dass der Feststoffabscheider eine den feststoffbefreiten oder feststoffarmen Luft/Wasser-Gasstrom dorthin führende Leitungsverbindung zu dem den Brennern des Dampferzeugers oder Kessels und/oder einer Kohlemühle Verbrennungsluft zuführenden Verbrennungsluftstrom aufweist.

In besonders vorteilhafter Weise lässt sich das erfindungsgemäße Verfahren für die Auskopplung von Wärmeenergie aus dem Rauchgasstrom des Kraftwerkes nutzen, ohne dass die Temperaturführung und die Rauchgasmenge des Rauchgasstromes dabei beeinflusst werden. Die Erfindung sieht daher in Ausgestaltung vor, dass der zugeführte Luftstrom vor Eintritt in den Sprühtrockner mittels aus dem Rauchgasstrom ausgekoppelter und in den Luftstrom eingekoppelter Wärmeenergie, vorzugsweise vollständig, auf die für die Verdampfung des Abwassers ausreichende Temperatur, zumindest auf einen Teilbetrag der für die Verdampfung des Abwassers ausreichenden Temperatur, erhitzt wird. Dies lässt sich insbesondere dadurch erreichen, dass ein regenerativer Luftvorwärmer, in welchem zugeführte Verbrennungsluft mit Hilfe des ebenfalls zugeführten Rauchgasstromes erhitzt wird, verwendet wird und von dem darin aufgeheizten Verbrennungsluftstrom ein Teilluftstrom abgezweigt und dem Sprühtrockner zur Verdampfung des Abwassers zugeführt wird.

Der heiße Luftstrom kann aber auch auf eine andere Art und Weise für die Verdampfung des Abwassers benötigte Temperatur erhitzt werden. Die Erfindung sieht daher in Ausgestaltung daher auch vor, dass der zugeführte Luftstrom vor Eintritt in den Sprühtrockner (1) mittels von einem Kanalbrenner und/oder einem Heißgaserzeuger bereitgestellter und in den Luftstrom eingekoppelter Wärmeenergie, vorzugsweise vollständig, auf die für die Verdampfung des Abwassers ausreichende Temperatur, zumindest auf einen Teilbetrag der für die Verdampfung des Abwassers ausreichenden Temperatur, erhitzt wird.

Ebenso ist es möglich, dass der zugeführte Luftstrom vor Eintritt in den Sprühtrockner mittels in Form von Turbinenanzapfdampf und/oder aus einem Wasser/Dampf-Kreislauf des Dampfkraftwerks abgezweigtem Dampf und/oder in Form von elektrischer Energie bereitgestellter und in den Luftstrom eingekoppelter Wärmeenergie, vorzugsweise vollständig, auf die für die Verdampfung des Abwassers ausreichende Temperatur, zumindest auf einen Teilbetrag der für die Verdampfung des Abwassers ausreichenden Temperatur, erhitzt wird, wie dies die Erfindung auch vorsieht.

Da es je nach Anwendungsfall sein kann, dass eine einzelne Wärmeenergie zur Verfügung stellende Wärmequelle nicht ausreicht, um den für die Verdampfung des Abwassers notwendigen Luftstrom auf eine für die Verdampfung des Abwassers ausreichende Temperatur zu erhitzen, zeichnet sich die Erfindung in weiterer Ausgestaltung auch dadurch aus, dass der zugeführte Luftstrom vor Eintritt in den Sprühtrockner in Kombination einer oder mehrerer der nachfolgenden Vorgehensweisen mittels insbesondere des Luftvorwärmers aus dem Rauchgasstrom ausgekoppelter und/oder von einem Kanalbrenner und/oder einem Heißgaserzeuger bereitgestellter und/oder in Form von Turbinenanzapfdampf und/oder aus einem Wasser/Dampf-Kreislauf des Dampfkraftwerks abgezweigtem Dampf und/oder in Form von elektrischer Energie bereitgestellter und jeweils in den Luftstrom eingekoppelter Wärmeenergie auf die für die Verdampfung des Abwassers ausreichende Temperatur erhitzt wird.

Zweckmäßig ist gemäß einer weiteren Ausgestaltung der Erfindung zudem auch, dass der dem Sprühtrockner zugeführte Abwassermassenstrom und der dem Sprühtrockner zugeführte Luftmassenstrom derart aufeinander abgestimmt werden, dass eine vollständige Verdampfung des zugeführten Abwassermassenstroms erreicht wird.

Ohne große Veränderungen am energetischen Gesamtkonzept und insbesondere am energetischen und mengenmäßigen Rauchgaskonzept lässt sich das erfindungsgemäße Verfahren dadurch realisieren, dass der dem Sprühtrockner zugeführte heiße Luftstrom in dem vom Rauchgas durchströmten regenerativen Luftvorwärmer auf eine für die Verdampfung des Abwassers im Sprühtrockner ausreichende Temperatur erhitzt und von dem den Brennern des Dampferzeugers oder Kessels und/oder mindestens einer Kohlemühle zugeführten Verbrennungsluftstrom des Dampfkraftwerks abgezweigt wird, was die Erfindung weiterhin vorsieht.

In vorteilhafter Weiterbildung zeichnet sich die Erfindung auch dadurch aus, dass der dem Sprühtrockner zugeführte heiße Luftstrom von dem dem Dampferzeuger oder Kessel als Primärluft und/oder als Sekundärluft zuzuführenden oder zugeführten Verbrennungsluftstrom abgezweigt wird.

Hierbei ist es dann auch möglich, dass der dem Sprühtrockner zugeführte heiße Luftstrom zumindest teilweise als Teilstrom von dem dem Dampferzeuger oder Kessel als Primärluft und/oder Sekundärluft zuzuführenden oder zugeführten Verbrennungsluftstrom in Verbrennungsluftströmungsrichtung vor einer zugeordneten Kohlemühle abgezweigt wird, was die Erfindung in Ausgestaltung ebenfalls vorsieht.

Eine energetisch besonders günstige Ausgestaltung des Verfahrens sieht vor, dass der dem Sprühtrockner zugeführte heiße Luftstrom zumindest teilweise als Teilstrom von dem dem Dampferzeuger oder Kessel als Primärluft und/oder Sekundärluft zuzuführenden oder zugeführten Verbrennungsluftstrom in Verbrennungsluftströmungsrichtung zwischen dem Luftvorwärmer und dem Dampferzeuger oder Kessel abgezweigt wird.

Ebenso ist dies aber auch dadurch erreichbar, dass der Luft/Wasser-Gasstrom nach dem Verlassen des Feststoffabscheiders dem dem Dampferzeuger oder Kessel als Primärluft und/oder Sekundärluft zuzuführenden oder zugeführten Verbrennungsluftstrom zugeführt wird, was die Erfindung ebenfalls vorsieht.

Für die unmittelbar Rückführung des Wasserdampfanteils in den Dampferzeuger oder Kessel ist es von besonderem Vorteil, wenn der Luft/Wasser-Gasstrom nach dem Verlassen des Feststoffabscheiders dem dem Dampferzeuger oder Kessel als Sekundär- und/oder Tertiärluft zuzuführenden oder zugeführten Verbrennungsluftstrom zugeführt wird und/oder wenn der Luft/Wasser-Gasstrom nach dem Verlassen des Feststoffabscheiders dem dem Dampferzeuger oder Kessel als Oberluft oder Kesselluft zuzuführenden oder zugeführten Verbrennungsluftstrom zugeführt wird, wodurch sich die Erfindung ebenfalls auszeichnet.

Schließlich ist es auch möglich, dass der sich im Sprühtrockner bildende Luft/Wasser-Gasstrom, vorzugsweise nach dem Verlassen eines/des Feststoffabscheiders, dem Rauchgasstrom, vorzugsweise in Rauchgasströmungsrichtung stromaufwärts eines Rauchgaselektrofilters, zugeführt wird und/oder dass der Luft/Wasser-Gasstrom nach dem Verlassen des Feststoffabscheiders einem Rauchgaskamin zugeführt wird, wodurch sich weitere Ausgestaltungen der Erfindung auszeichnen.

Das erfindungsgemäße Dampfkraftwerk zeichnet sich in Ausgestaltung dadurch aus, dass die eine oder mehreren Wärmequelle(n) der Rauchgasstrom im Luftvorwärmer und/oder ein Wärmeenergie bereitstellender und in den Luftstrom einkoppelnder Kanalbrenner und/oder Heißgaserzeuger und/oder eine Wärmeenergie in Form von Turbinenanzapfdampf und/oder in Form von aus einem Wasser/Dampf-Kreislauf des Dampfkraftwerks abgezweigtem Dampf und/oder in Form von elektrischer Energie bereitstellende und in den Luftstrom einkoppelnde Wärmequelle ist/sind.

Hierbei ist es dann gemäß weiterer Ausgestaltungen der Erfindung von Vorteil, wenn der Luftvorwärmer als regenerativer Luftvorwärmer ausgebildet ist, mittels welchem Wärmeenergie aus dem Rauchgasstrom ausgekoppelt und in den durch diese erhitzten Luftstrom eingekoppelt wird.

Der in dem Feststoffabscheider von mitgeführten Feststoffen befreite Luft/Wasser-Gasstrom lässt sich in vorteilhafter Weise auch dem bei der Verbrennung entstehenden Rauchgasstrom zumischen. Die Erfindung zeichnet sich daher in weiterer Ausgestaltung zudem dadurch aus, dass der Feststoffabscheider eine den feststoffbefreiten oder feststoffarmen Luft/Wasser-Gasstrom dorthin zuführende Leitungsverbindung zum Rauchgasstrom mit Einmündung in den Rauchgasstrom insbesondere in Rauchgasströmungsrichtung stromaufwärts des Elektrofilters aufweist.
Es ist aber auch möglich, den feststoffbefreiten Luft/Wasser-Gasstrom dem Rauchgaskamin zuzuführen, so dass sich die Erfindung in Weiterbildung auch dadurch auszeichnet, dass der Feststoffabscheider eine den feststoffbefreiten oder feststoffarmen Luft/Wasser-Gasstrom dorthin führende Leitungsverbindung zum Rauchgaskamin aufweist.

Bei dem Feststoffabscheider handelt es sich vorzugsweise um einen Flieh- und/oder Schwerkraftabscheider, der einen Feststoffabscheidegrad von ≥ 95% aufweist. Die Erfindung sieht daher weiterhin vor, dass der Feststoffabscheider als Flieh- und/oder Schwerkraftabscheider oder als Elektrofilter ausgebildet ist. Hierbei ist es dann zweckmäßig, wenn der Feststoffabscheider einen Feststoffabscheidegrad von ≥ 95% aufweist, was die Erfindung schließlich auch vorsieht.

Die Erfindung ist nachstehend anhand einer Zeichnung beispielhaft näher erläutert. Diese zeigt in
- Fig. 1: in schematischer Blockdiagramm-Darstellung eine erste Ausführungsform der Erfindung,
- Fig. 2: in schematischer Blockdiagramm-Darstellung ein Beispiel einer Ausführungsform,
- Fig. 3: in schematischer Blockdiagramm-Darstellung ein weiteres Beispiel einer Ausführungsform und in
- Fig. 4: in schematischer Schaltbilddarstellung einen Übersichtsplan von Anschlussvarianten nach einem erfindungsgemäßen Ausführungsbeispiel.

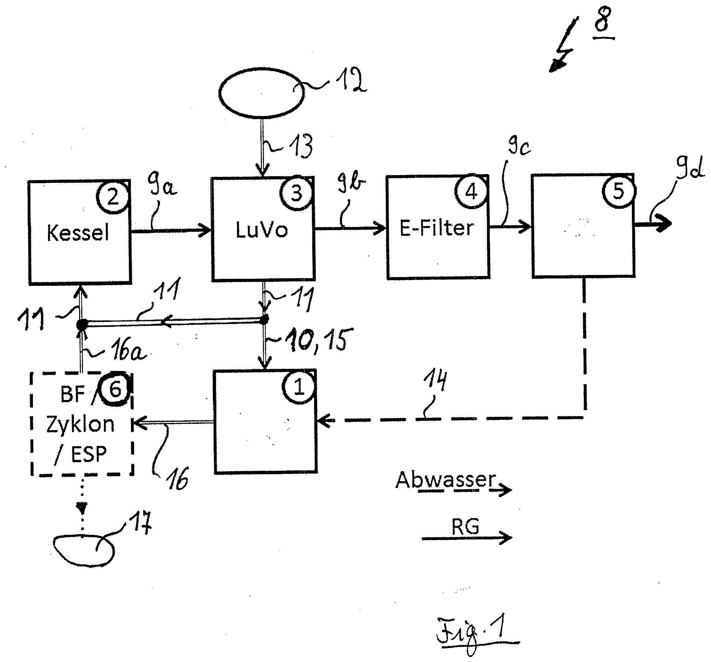

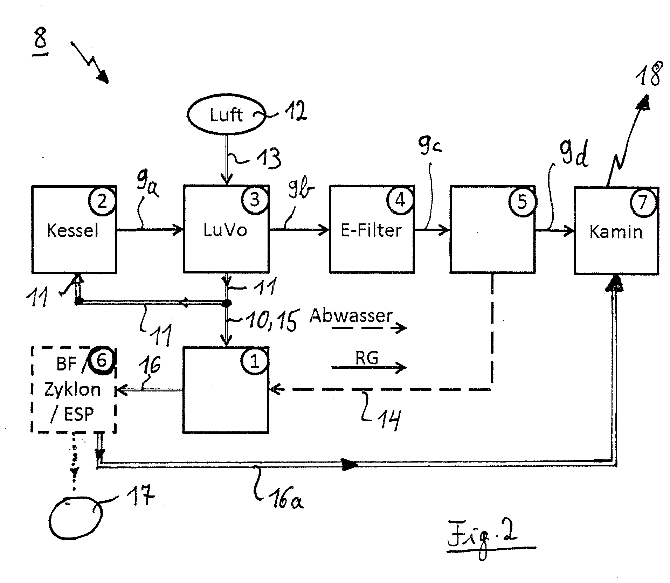

Die Fig. 1 zeigt in der schematischen Blockdiagramm-Darstellung die Rauchgasseite eines insgesamt mit 8 bezeichneten Dampfkraftwerks, das einen Dampferzeuger oder Kessel 2, einen Luftvorwärmer 3, einen Elektrofilter 4, eine Rauchgasentschwefelungsanlage 5 und einen stofflich und/oder energetisch in den durch die Pfeile 9a-9b symbolisierten Rauchgasstrom und/oder Rauchgaskanal eingebundenen Sprühtrockner 1 mit zugeordnetem Feststoffabscheider 6 umfasst. In der Fig. 1 wie auch in den nachfolgenden Fig. 2-4 ist der Rauchgasstrom (RG) in Form einer durchgezogenen Linie (Pfeil), der Luftstrom sowie der Luft/Wasser-Gasstrom als Doppelstrich (Pfeil) und die Zuführung des zu verdampfenden Abwassers als gestrichelte Linie (Pfeil) dargestellt.

Bei der Ausführungsform nach der Fig. 1 wird dem Sprühtrockner 1 ein Teilstrom 10 der im regenerativen Luftvorwärmer 3 auf die im Sprühtrockner 1 benötigte Temperatur erhitzten Verbrennungsluft 11 zugeführt. In dem Luftvorwärmer 3 wird die Verbrennungsluft 11 auf übliche und bekannte Art und Weise mittels des vom Dampferzeuger oder Kessel 2 stammenden Rauchgasstromes 9a durch Übertragung der aus dem Rauchgasstrom 9a ausgekoppelten Wärmeenergie erwärmt und erhitzt. Auf der Luftseite wird dem Luftvorwärmer 3 in üblicher Art und Weise Luft 12 (Umgebungsluft) als kalte Verbrennungsluft 13 zugeführt.

Dem Sprühtrockner 1 wird das bei der Entschwefelung des Rauchgasstromes 9c in der im Rauchgasstrom 9c angeordneten Rauchgasentschwefelungsanlage 5 entstehende Abwasser 14 zugeführt und im Sprühtrockner 1 versprüht. Hierbei wird gleichzeitig der Teilstrom 10 der Verbrennungsluft 11 im Sprühtrockner 1 mit einer solchen Temperatur als heißer Luftstrom 15 zugeführt, dass das Abwasser 14 in dem Sprühtrockner 1 verdampft. Der in dem Sprühtrockner 1 durch die Verdampfung des Abwassers 14 entstehende Luft/Wasser-Gasstrom 16 wird einem Feststoffabscheider 6 zugeführt. Der Feststoffabscheider 6 ist als Flieh- und/oder Schwerkraftabscheider ausgebildet. Hier werden in dem Luft/Wasser-Gasstrom 16 enthaltene Feststoffe, insbesondere Salze, mit einem Feststoffabscheidegrad von ≥ 95% aus dem Luft/Wasser-Gasstrom 16 abgeschieden. Das hier erhaltene Abscheideprodukt 17 lässt sich als salzhaltiges Zusatzprodukt für Streusalz kommerziell nutzen. Der vom Feststoff befreite, den Feststoffabscheider 6 verlassende Luft/Wasser-Gasstrom 16a wird dann wieder dem dem Dampferzeuger oder Kessel 2 als Verbrennungsluft, dies kann Primärluft und/oder Sekundärluft und/oder Tertiärluft sein, oder Oberluft (over fire air) und/oder sonstige Kesselluft sein, zugeführten Verbrennungsluftstrom 11 zugeführt und zugemischt. Zumindest ist der den Feststoffabscheider 6 verlassende Luft/Wasser-Gasstrom 16a feststoffarm ausgebildet.

Das im Dampferzeuger oder Kessel 2 bei der Verbrennung von fossilem Brennstoff entstehend Rauchgas wird zunächst als Rauchgasstrom 9a dem Luftvorwärmer 3 zugeführt und gibt hier Wärmeenergie an die zugeführte kalte Verbrennungsluft 13 ab. In Rauchgasströmungsrichtung nach dem Luftvorwärmer 3 durchströmt das Rauchgas als Rauchgasstrom 9b den Elektrofilter 4, in welchem die Flugasche aus dem Rauchgas herausgefiltert wird. Danach strömt das Rauchgas als Rauchgasstrom 9c zur und durch die Rauchgasentschwefelungsanlage 5, wonach das entschwefelte Rauchgas einem in der Fig. 1 nicht dargestellten Rauchgaskamin 7 mit Kühlturm zugeleitet und in die Atmosphäre entlassen wird.

Die Beispiel nach der Fig. 2 entspricht in weiten Teilen dem erfindungsgemäßen Ausführungsbeispiel nach der Fig. 1, so dass hier im Wesentlichen dieselben Bezugszeichen verwendet werden, die damit auch zur Ausführungsform nach der Fig. 1 identische oder gleich wirkende Elemente oder Stoffströme bezeichnen. Der Fig. 2 ist nun auch der die Rauchgasentschwefelungsanlage 5 verlassende Rauchgasstrom 9d zu entnehmen, der dem Kamin 7 mit Kühlturm zugeleitet und danach in die Atmosphäre 18 entlassen wird.

Der Unterschied zu der Ausführungsform nach der Fig. 1 besteht darin, dass der den Feststoffabscheider 6 verlassende, feststofffreie oder zumindest feststoffarme Luft/Wasser-Gasstrom 16a, der mit Wasserdampf angereichert und abgekühlt ist, unmittelbar als Abluft - zusammen mit dem gereinigten Abgasstrom 9d - über den Kamin 7 mit Kühlturm der Atmosphäre 18 zugeführt wird.

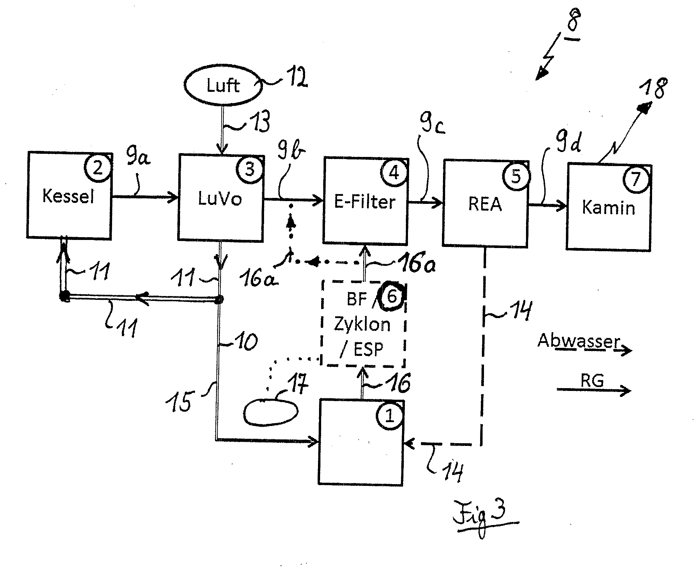

Auch das in der schematischen Blockdiagramm-Darstellung nach der Fig. 3 dargestellte weitere Beispiel zeichnet sich durch die zu den Ausführungsformen nach den Fig. 1 und 2 identische, durch die Bezeichnung mit identischen Bezugsziffern gekennzeichnete grundlegende Verfahrensgestaltung aus. Lediglich die Führung des den Feststoffabscheider 6 verlassenden feststofffreien oder feststoffarmen Luft/Wasser-Gasstroms 16a ist wiederum unterschiedlich. Im Beispiel nach der Fig. 3 wird dieser Luft/Wasser-Gasstrom 16a dem Elektrofilter 4 und/oder dem diesen durchströmenden Rauchgasstrom 9b zugeführt und zugemischt.

In nicht dargestellter Weise sind natürlich auch Kombinationen der in den Fig. 1-3 dargestellten Verläufe des Luft/Wasser-Gasstroms 16a möglich. Der Luft/Wasser-Gasstrom 16a kann folglich dem Verbrennungsluftstrom 11 und/oder dem Kamin 7 und/oder dem Elektrofilter 4 zugeführt und damit der Verbrennungsluft 11 und/oder dem Rauchgasstrom 9a, 9b, 9c, 9d zugemischt und/oder in die Atmosphäre 18 abgeführt werden. Neben der dargestellten Zuführung und Zumischung des Luft/Wasser-Gasstroms 16a in den Rauchgasstrom im Bereich des Elektrofilters 4 ist dies auch an anderen hier nicht dargestellten, aber beispielsweise in den Patentansprüchen aufgeführten, Positionen und Einmündungsstellen möglich. So ist in der Fig. 3 strichpunktiert die Zuführung und Zumischung des Luft/Wasser-Gasstroms 16a in den Rauchgasstrom 9b an einer Position, die in Rauchgasströmungsrichtung stromabwärts des Luftvorwärmers 3 und stromaufwärts des Elektrofilters 4 ausgebildet ist, dargestellt.

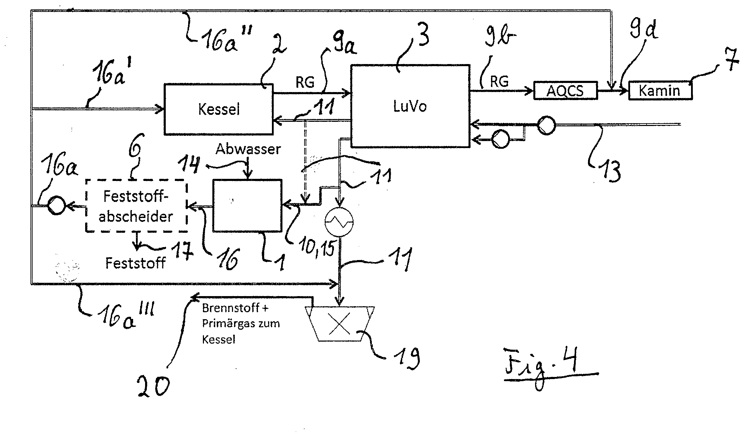

Der Fig. 4 sind drei Leitungsverläufe 16a', 16a" und 16a'" zu entnehmen, welche der den Feststoffabscheider 6 verlassende feststofffreie oder feststoffarme Luft/Wasser-Gasstrom 16a nehmen kann. Bei dem erfindungsgemäßen Leitungsverlauf 16a' wird der Luft/Wasser-Gasstrom 16a dem Dampferzeuger oder Kessel 2 zugeführt. Bei dem Leitungsverlauf 16a" wird der Luft/Wasser-Gasstrom 16a in Rauchgasströmungsrichtung vor dem Kamin 7 dem Rauchgasstrom 9d zugeführt und bei dem erfindungsgemäßen Leitungsverlauf 16a'" wird der Luft/Wasser-Gasstrom 16a der als Primärluft einer Kohlemühle 19 zugeführten Verbrennungsluft 11 zugemischt, welches Gasgemisch dann als Brennstoff/Primärgas-Gemisch 20 den Brennern des Dampferzeugers oder Kessels 2 zugeführt wird. Dieser Leitungsverlauf 16a'" ist allerdings nur bei der Vermahlung von Steinkohle in der Mühle 19 sinnvoll und zweckmäßig. Die Leitungsverläufe 16a' und 16a" sind hingegen sowohl bei der Verwendung von Braunkohle als auch bei der Verwendung von Steinkohle als fossilem Energieträger sinnvoll und zweckmäßig.

Bei den in den Fig. 1-4 dargestellten Beispielen handelt es sich um ein Dampfkraftwerk 8, das mit einem Luftvorwärmer 3 ausgebildet ist, mit welchem im Gegenstrom zugeführte kalte Verbrennungsluft 13 auf die Temperatur erwärmt wird, mit welcher sie dann als Verbrennungsluft 11 den Brennern des Kessels 2 des Dampfkraftwerkes 8 zugeführt wird, wobei von der erhitzten Verbrennungsluft 11 ein Teilstrom 10 abgezweigt und als heißer Luftstrom 15 dem Sprühtrockner 1 zur Verdampfung des diesem ebenfalls zugeführten Abwassers 14 genutzt wird. Es sind nun aber auch Dampfkraftwerke bekannt, die keinen Luftvorwärmer zur Erwärmung der Verbrennungsluft 11 aufweisen. Beispielsweise können Kraftwerke mit sogenannten Kanalbrennern ausgestattet sein, die in der den Brennern eines Dampferzeugers 2 Verbrennungsluft zuführenden Leitungen oder Kanälen angeordnet sind. Mittels dieser Kanalbrenner wird beispielsweise zugeführtes Gas verbrannt und die dabei entstehende Flamme überträgt dann Wärmeenergie an die in diesem Kanal oder dieser Leitung geführte Verbrennungsluft 11. Auch ein auf diese Weise als Verbrennungsluftstrom 11 oder daraus abgezweigter Teilstrom 10 an Verbrennungsluft 11 kann in nicht näher dargestellter Weise als heißer Luftstrom 15 einem Sprühtrockner 1 zur Verdampfung des Abwassers 14 zugeführt werden. Neben dieser Ausführungsform ist es aber auch möglich, einen heißen Luftstrom 15 dadurch zu erzeugen, dass dieser beispielsweise mit aus dem Wasser/Dampf-Kreislauf des Dampfkraftwerkes 8 stammendem Dampf auf die benötigte Temperatur zu dem heißen Luftstrom 15 erhitzt wird. Grundsätzlich umfasst die vorliegende Erfindung also alle denkbaren Möglichkeiten, einen ausreichend heißen Luftstrom 15 zu erzeugen, der dann mit einer ausreichenden Temperatur zur Verdampfung des Abwassers 14 in dem Sprühtrockner 1 Verwendung findet. Bevorzugt ist es aber, Verbrennungsluft 11, zumindest einen Teilstrom 10 der Verbrennungsluft 11, für die Verdampfung des Abwassers 14 in dem Sprühtrockner 1 zu einem heißen Luftstrom 15 mit entsprechender Aufheizung oder Nachheizung in einem in den Rauchgasstrom eingebundenen Luftvorwärmer und/oder einem oder mehreren Kanalbrenner(n) und/oder mittels Dampf, beispielsweise unter Nutzung eines oder mehrerer Wärmetauscher, auf die in dem Sprühtrockner 1 für die Verdampfung des Abwassers 14 benötigte Temperatur zu erhitzen.

Mit dem erfindungsgemäßen Verfahren und dem erfindungsgemäßen Dampfkraftwerk lässt sich zum einen eine Erhöhung des Chloridgehaltes im Rauchgas durch das im Feststoffabscheider 6 als Salz abgeschiedene Abscheidungsprodukt 17 und zum anderen ein Einfluss des Sprühtrockners 1 auf die wesentliche Absenkung der Rauchgastemperatur am rauchgasströmungsseitigen Ausgang des Luftvorwärmers 3 vermeiden. Insbesondere bestehen die mit der Erfindung einhergehenden Vorteile darin, dass durch die Verwendung von Luft als Energiequelle für das Verdampfen des Abwassers 14 eine Auswirkung auf das Rauchgas vermieden wird, wodurch insbesondere die Gefahr, dass Schwefeldioxid (SO₂) in Form von Schwefelsäure (H₂SO₄) aufgrund zu geringer Rauchgastemperaturen, nämlich Temperaturen von unter 120 °C, auskondensiert, umgangen wird. Darüber hinaus bietet die Verwendung des separaten Feststoffabscheiders 6 die Möglichkeit, die hier ausfallenden Feststoffe, insbesondere Salz, abzufangen, so dass bei Rückführung des Luft/Wasser-Gasstroms 16a in den Kessel 2 oder den Rauchgasstrom 9a-9d keine Flugasche verunreinigt wird. Dieser Feststoffabscheider 6 muss im Gegensatz beispielsweise zu der Verwendung eine Sprühtrockners im Rauchgaskanal, wie dies bei der WES-Technologie der Fall ist, keinen Feststoffabscheidegrad von 99,9 % zur Erhaltung der Emissionsgrenzwerte einhalten, da der Luft/Wasser-Gasstrom 16a dem Kessel 2 zugeführt werden kann und dann zusammen mit dem den Kessel 2 verlassenden Rauchgas 9a die normale Rauchgasreinigung, d.h. den normalen Rauchgasstrang oder Rauchgaskanal, durchläuft. Ein weiterer Vorteil des erfindungsgemäßen Verfahrens und des erfindungsgemäßen Dampfkraftwerkes besteht darin, dass das als Abscheideprodukt 17 im Feststoffabscheider 6 abgeschiedene Salz als Zumischprodukt für Streusalz verkaufbar ist, da es nicht mit Flugasche verunreinigt ist.

Für einen Kraftwerksblock der 1 GW(Gigawatt)-Klasse durchgeführte Berechnungen zeigen, dass bei einer maximalen Abwasserlast die Sekundärluft-Temperatur um ca. 30 Kelvin von 371 °C auf 345 °C abgekühlt werden kann.

Insgesamt ist es mit dem erfindungsgemäßen Verfahren und dem erfindungsgemäßen Dampfkraftwerk möglich, in energetisch günstiger Art und Weise eine nach einem Nassverfahren arbeitende Rauchgasentschwefelungsanlage 5, beispielsweise einen Rauchgaswäscher, abwasserfrei rauchseitig eines Kessels 2 eines fossil befeuerten Dampfkraftwerks 8 energetisch und stofflich in den Rauchgasstrang einzubinden und zu integrieren.

## Patentansprüche

1. Verfahren zum abwasserfreien Betrieb einer in den Rauchgasstrom (9a-9d) eines fossil befeuerten Dampferzeugers oder Kessels (2) eines Dampfkraftwerkes (8) eingebundenen, nach einem Nassverfahren arbeitenden Rauchgasentschwefelungsanlage (5), deren Abwasser (14) in einem Sprühtrockner (1) mittels durch einen Gasstrom bereitgestellter Wärmeenergie in Form eines zugeführten heißen, eine für die Verdampfung des Abwassers (14) ausreichende Temperatur aufweisenden Luftstroms (15) verdampft wird, wobei der sich im Sprühtrockner (1) bildende feststoffbeladene Luft/Wasser-Gasstrom (16) einem dem Sprühtrockner (1) nachgeschalteten Feststoffabscheider (6) zugeführt und dort der im Luft/Wasser-Gasstrom (16) enthaltene Feststoffanteil abgeschieden wird,
**dadurch gekennzeichnet,**
**dass** der Luft/Wasser-Gasstrom (16, 16a) nach dem Verlassen des Feststoffabscheiders (6) dem Dampferzeuger oder Kessel (2) zugeführt wird.

2. Verfahren nach Anspruch 1, **dadurch gekennzeichnet, dass** der zugeführte Luftstrom (15) vor Eintritt in den Sprühtrockner (1) mittels aus dem Rauchgasstrom (9a - 9d) ausgekoppelter und in den Luftstrom (15) eingekoppelter Wärmeenergie, vorzugsweise vollständig, auf die für die Verdampfung des Abwassers (14) ausreichende Temperatur, zumindest auf einen Teilbetrag der für die Verdampfung des Abwassers (14) ausreichenden Temperatur, erhitzt wird.

3. Verfahren nach Anspruch 1, **dadurch gekennzeichnet, dass** der zugeführte Luftstrom (15) vor Eintritt in den Sprühtrockner (1) mittels von einem Kanalbrenner und/oder einem Heißgaserzeuger bereitgestellter und in den Luftstrom (15) eingekoppelter Wärmeenergie, vorzugsweise vollständig, auf die für die Verdampfung des Abwassers (14) ausreichende Temperatur, zumindest auf einen Teilbetrag der für die Verdampfung des Abwassers (14) ausreichenden Temperatur, erhitzt wird.

4. Verfahren nach Anspruch 1, **dadurch gekennzeichnet, dass** der zugeführte Luftstrom (15) vor Eintritt in den Sprühtrockner (1) mittels in Form von Turbinenanzapfdampf und/oder aus einem Wasser/Dampf-Kreislauf des Dampfkraftwerks (8) abgezweigtem Dampf und/oder in Form von elektrischer Energie bereitgestellter und in den Luftstrom (15) eingekoppelter Wärmeenergie, vorzugsweise vollständig, auf die für die Verdampfung des Abwassers (14) ausreichende Temperatur, zumindest auf einen Teilbetrag der für die Verdampfung des Abwassers (14) ausreichenden Temperatur, erhitzt wird.

5. Verfahren nach einem oder mehreren der vorhergehenden Ansprüche, **dadurch gekennzeichnet, dass** der zugeführte Luftstrom (15) vor Eintritt in den Sprühtrockner (1) in Kombination einer oder mehrerer der nachfolgenden Vorgehensweisen mittels insbesondere des Luftvorwärmers (3) aus dem Rauchgasstrom (9a - 9d) ausgekoppelter und/oder von einem Kanalbrenner und/oder einem Heißgaserzeuger bereitgestellter und/oder in Form von Turbinenanzapfdampf und/oder aus einem Wasser/DampfKreislauf des Dampfkraftwerks (8) abgezweigtem Dampf und/oder in Form von elektrischer Energie bereitgestellter und jeweils in den Luftstrom (15) eingekoppelter Wärmeenergie auf die für die Verdampfung des Abwassers (14) ausreichende Temperatur erhitzt wird.

6. Verfahren nach einem der vorhergehenden Ansprüche, **dadurch gekennzeichnet, dass** der dem Sprühtrockner (1) zugeführte Abwassermassenstrom (14) und der dem Sprühtrockner (1) zugeführte Luftmassenstrom (15) derart aufeinander abgestimmt werden, dass eine vollständige Verdampfung des zugeführten Abwassermassenstroms (14) erreicht wird.

7. Verfahren nach einem der Ansprüche 1-2 oder 5-6, **dadurch gekennzeichnet, dass** der dem Sprühtrockner (1) zugeführte heiße Luftstrom (15) in dem vom Rauchgas (9a) durchströmten regenerativen Luftvorwärmer (3) auf eine für die Verdampfung des Abwassers (14) im Sprühtrockner (1) ausreichende Temperatur erhitzt und von dem den Brennern des Dampferzeugers oder Kessels (2) und/oder mindestens einer Kohlemühle (19) zugeführten Verbrennungsluftstrom (11) des Dampfkraftwerks (8) abgezweigt wird.

8. Verfahren nach einem der vorhergehenden Ansprüche, **dadurch gekennzeichnet, dass** der dem Sprühtrockner (1) zugeführte heiße Luftstrom (15) von dem dem Dampferzeuger oder Kessel (2) als Primärluft und/oder als Sekundärluft zuzuführenden oder zugeführten Verbrennungsluftstrom (11) abgezweigt wird.

9. Verfahren nach einem der vorhergehenden Ansprüche, **dadurch gekennzeichnet, dass** der dem Sprühtrockner (1) zugeführte heiße Luftstrom (15) zumindest teilweise als Teilstrom von dem dem Dampferzeuger oder Kessel (2) als Primärluft und/oder Sekundärluft zuzuführenden oder zugeführten Verbrennungsluftstrom (11) in Verbrennungsluftströmungsrichtung vor einer zugeordneten Kohlemühle (19) abgezweigt wird.

10. Verfahren nach einem der Ansprüche 1 - 2 oder 5- 9, **dadurch gekennzeichnet, dass** der dem Sprühtrockner (1) zugeführte heiße Luftstrom (15) zumindest teilweise als Teilstrom von dem dem Dampferzeuger oder Kessel (2) als Primärluft und/oder Sekundärluft zuzuführenden oder zugeführten Verbrennungsluftstrom (11) in Verbrennungsluftströmungsrichtung zwischen dem Luftvorwärmer (3) und dem Dampferzeuger oder Kessel (2) abgezweigt wird.

11. Verfahren nach einem der vorhergehenden Ansprüche, **dadurch gekennzeichnet, dass** der Luft/Wasser-Gasstrom (16a) nach dem Verlassen des Feststoffabscheiders (6) dem dem Dampferzeuger oder Kessel (2) als Primärluft und/oder Sekundärluft zuzuführenden oder zugeführten Verbrennungsluftstrom (11) zugeführt wird.

12. Verfahren nach einem der vorhergehenden Ansprüche, **dadurch gekennzeichnet, dass** der Luft/Wasser-Gasstrom (16a) nach dem Verlassen des Feststoffabscheiders (6) dem dem Dampferzeuger oder Kessel (2) als Sekundär- und/oder Tertiärluft zuzuführenden oder zugeführten Verbrennungsluftstrom (11) zugeführt wird.

13. Verfahren nach einem der vorhergehenden Ansprüche, **dadurch gekennzeichnet, dass** der Luft/Wasser-Gasstrom (16a) nach dem Verlassen des Feststoffabscheiders (6) dem dem Dampferzeuger oder Kessel (2) als Oberluft oder Kesselluft zuzuführenden oder zugeführten Verbrennungsluftstrom (11) zugeführt wird.

14. Verfahren nach einem der vorhergehenden Ansprüche, **dadurch gekennzeichnet, dass** der sich im Sprühtrockner (1) bildende Luft/Wasser-Gasstrom (16, 16a), vorzugsweise nach dem Verlassen eines/des Feststoffabscheiders (6), dem Rauchgasstrom (9b), vorzugsweise in Rauchgasströmungsrichtung stromaufwärts eines Rauchgaselektrofilters (4), zugeführt wird.

15. Verfahren nach einem der vorhergehenden Ansprüche, **dadurch gekennzeichnet, dass** der Luft/Wasser-Gasstrom (16a) nach dem Verlassen des Feststoffabscheiders (6) einem Rauchgaskamin (7) zugeführt wird.

16. Dampfkraftwerk (8), insbesondere zur Durchführung des Verfahrens nach einem der Ansprüche 1 - 15, umfassend einen fossilbefeuerten Dampferzeuger oder Kessel (2) mit einem dessen Rauchgasstrom (9a, 9b, 9c, 9d) führenden Rauchgasstrang oder Rauchgaskanal, der in Rauchgasströmungsrichtung nacheinander angeordnet vorzugsweise einen Luftvorwärmer (3), einen Elektrofilter (4) und eine nach einem Nassverfahren arbeitende Rauchgasentschwefelungsanlage (5) sowie einen den gereinigten Abgasstrom abführenden Kamin (7) aufweist, und mit dem Dampferzeuger oder Kessel (2) Verbrennungsluft (11) in Form von erhitzter Primär-, Sekundär- und/oder Tertiärluft zuführenden Leitungen sowie mit einem das Abwasser (14) der Rauchgasentschwefelungsanlage (5) verdampfenden Sprühtrockner (1), wobei der Sprühtrockner (1) eine einen heißen, das Abwasser (14) im Sprühtrockner (1) verdampfenden Luftstrom (15) zuführende Leitungsverbindung aufweist, die mit einer oder mehreren Wärmequelle(n) in Leitungsverbindung steht, welche die für die Erhitzung des Luftstroms (15) auf eine für die Verdampfung des Abwassers (14) ausreichende Temperatur notwendige Wärmeenergiemenge bereitstellt/bereitstellen und wobei das Dampfkraftwerk (8) einen Feststoffabscheider (6) aufweist, der in einer den im Sprühtrockner (1) beim Verdampfen des Abwassers (14) mit dem zugeführten heißen Luftstrom (15) gebildeten Luft/Wasser-Gasstrom (16) zuführenden Leitungsverbindung mit dem Sprühtrockner (1) steht,
**dadurch gekennzeichnet,**
**dass** der Feststoffabscheider (6) eine den feststoffbefreiten oder feststoffarmen Luft/Wasser-Gasstrom (16a) dorthin führende Leitungsverbindung zu dem den Brennern des Dampferzeugers oder Kessels (2) und/oder einer Kohlemühle (19) Verbrennungsluft zuführenden Verbrennungsluftstrom (11) aufweist.

17. Dampfkraftwerk (8) nach Anspruch 16, **dadurch gekennzeichnet, dass** die eine oder mehreren Wärmequelle(n) der Rauchgasstrom im Luftvorwärmer (3) und/oder ein Wärmeenergie bereitstellender und in den Luftstrom (15) einkoppelnder Kanalbrenner und/oder Heißgaserzeuger und/oder eine Wärmeenergie in Form von Turbinenanzapfdampf und/oder in Form von aus einem Wasser/Dampf-Kreislauf des Dampfkraftwerks (8) abgezweigtem Dampf und/oder in Form von elektrischer Energie bereitstellende und in den Luftstrom (15) einkoppelnde Wärmequelle ist/sind.

18. Dampfkraftwerk (8) nach Anspruch 16 oder 17, **dadurch gekennzeichnet, dass** der Luftvorwärmer (3) als regenerativer Luftvorwärmer ausgebildet ist, mittels welchem Wärmeenergie aus dem Rauchgasstrom (9a) ausgekoppelt und in den durch diese erhitzten Luftstrom (15) eingekoppelt wird.

19. Dampfkraftwerk (8) nach einem der Ansprüche16 - 18, **dadurch gekennzeichnet, dass** der Feststoffabscheider (6) eine den feststoffbefreiten oder feststoffarmen Luft/Wasser-Gasstrom (16a) dorthin führende Leitungsverbindung zum Rauchgasstrom (9a - 9d) mit Einmündung in den Rauchgasstrom (9a - 9d) insbesondere in Rauchgasströmungsrichtung stromaufwärts des Elektrofilters (4) aufweist.

20. Dampfkraftwerk (8) nach einem der Ansprüche 16 - 19, **dadurch gekennzeichnet, dass** der Feststoffabscheider (6) eine den feststoffbefreiten oder feststoffarmen Luft/Wasser-Gasstrom (16a) dorthin führende Leitungsverbindung zum Rauchgaskamin (7) aufweist.

21. Dampfkraftwerk (8) nach einem der Ansprüche 16 - 20, **dadurch gekennzeichnet, dass** der Feststoffabscheider (6) als Flieh- und/oder Schwerkraftabscheider oder Elektrofilter ausgebildet ist.

22. Dampfkraftwerk (8) nach einem der Ansprüche 16 - 21, **dadurch gekennzeichnet, dass** der Feststoffabscheider (6) einen Feststoffabscheidegrad von ≥ 95 % aufweist.

## Claims

1. Method for the wastewater-free operation of a flue gas desulfurization plant (5) integrated into the flue gas flow (9a to 9d) of a fossil-fired steam generator or boiler (2) of a steam power station (8), operating according to a wet process, the wastewater (14) of which is evaporated in a spray dryer (1) by means of thermal energy provided by a gas flow in the form of a supplied hot air flow (15) having a sufficient temperature for the evaporation of the wastewater (14), wherein the solids-laden air/water gas flow (16) forming in the spray dryer (1) is fed to a solids separator (6) downstream of the spray dryer (1), where the solids content contained in the air/water gas flow (16) is separated,
**characterized in that**
the air/water gas flow (16, 16a) is supplied to the steam generator or boiler (2) after leaving the solids separator (6).

2. Method according to claim 1, **characterized in that** the supplied air flow (15) is heated, preferably completely, before entering the spray dryer (1) by means of thermal energy extracted from the flue gas flow (9a to 9d) and introduced into the air flow (15), to the temperature sufficient for the evaporation of the wastewater (14), at least to a partial amount of the temperature sufficient for the evaporation of the wastewater (14).

3. Method according to claim 1, **characterized in that** the supplied air flow (15) is heated, preferably completely, before entering the spray dryer (1) by means of thermal energy provided by a duct burner and/or a hot gas generator and introduced into the air flow (15), to the temperature sufficient for the evaporation of the wastewater (14), at least to a partial amount of the temperature sufficient for the evaporation of the wastewater (14).

4. Method according to claim 1, **characterized in that** the supplied air flow (15) is heated, preferably completely, before entering the spray dryer (1) by means of steam branched off in the form of turbine extraction steam and/or from a water/steam circuit of the steam power station (8) and/or thermal energy provided in the form of electric energy and introduced in the air flow (15), to the temperature sufficient for the evaporation of the wastewater (14), at least to a partial amount of the temperature sufficient for the evaporation of the wastewater (14).

5. Method according to one or more of the preceding claims, **characterized in that** the supplied air flow (15) is heated, before entering the spray dryer (1), in combination of one or more of the following methods by means of in particular thermal energy of the air preheater (3) extracted from the flue gas flow (9a-9d) and/or provided by a duct burner and/or a hot gas generator and/or in the form of turbine extraction steam and/or steam branched off from a water/steam circuit of the steam power station (8) and/or provided in the form of electric energy and respectively introduced in the air flow (15), to the temperature sufficient for the evaporation of the wastewater (14).

6. Method according to any one of the preceding claims, **characterized in that** the wastewater mass flow (14) supplied to the spray dryer (1) and the air mass flow (15) supplied to the spray dryer (1) are matched to one another in such a way that complete evaporation of the supplied wastewater mass flow (14) is achieved.

7. Method according to any one of claims 1-2 or 5-6, **characterized in that** the hot air flow (15) supplied to the spray dryer (1) is heated in the regenerative air preheater (3) through which the flue gas (9a) flows to a temperature sufficient for the evaporation of the wastewater (14) in the spray dryer (1) and is branched off from the combustion air flow (11) of the steam power station (8) supplied to the burners of the steam generator or boiler (2) and/or at least one coal mill (19).

8. Method according to any one of the preceding claims, **characterized in that** the hot air flow (15) supplied to the spray dryer (1) is branched off from the combustion air flow (11) to be supplied or supplied to the steam generator or boiler (2) as primary air and/or as secondary air.

9. Method according to any one of the preceding claims, **characterized in that** the hot air flow (15) supplied to the spray dryer (1) is at least partially branched off as a partial stream from the combustion air flow (11) to be supplied or supplied to the steam generator or boiler (2) as primary air and/or secondary air in the direction of combustion air flow upstream of an associated coal mill (19).

10. Method according to any one of claims 1 to 2 or 5 to 9, **characterized in that** the hot air flow (15) supplied to the spray dryer (1) is at least partially branched off as a partial stream from the combustion air flow (11) to be supplied or supplied to the steam generator or boiler (2) as primary air and/or secondary air in the combustion air flow direction between the air preheater (3) and the steam generator or boiler (2).

11. Method according to any one of the preceding claims, **characterized in that** the air/water gas flow (16a), after leaving the solids separator (6), is fed to the combustion air flow (11) to be supplied or supplied to the steam generator or boiler (2) as primary air and/or secondary air.

12. Method according to any one of the preceding claims, **characterized in that** the air/water gas flow (16a), after leaving the solids separator (6), is fed to the combustion air flow (11) to be supplied or supplied to the steam generator or boiler (2) as secondary and/or tertiary air.

13. Method according to any one of the preceding claims, **characterized in that** the air/water gas flow (16a), after leaving the solids separator (6), is fed to the combustion air flow (11) to be supplied or supplied to the steam generator or boiler (2) as over-fire air or boiler air.

14. Method according to any one of the preceding claims, **characterized in that** the air/water gas flow (16, 16a) forming in the spray dryer (1), preferably after leaving a/the solids separator (6), is fed to the flue gas flow (9b), preferably in the flue gas flow direction upstream of a flue gas electrostatic filter (6).

15. Method according to any one of the preceding claims, **characterized in that** the air/water gas flow (16a) is fed to a flue gas chimney (7) after leaving the solids separator (6).

16. Steam power station (8), in particular for carrying out the method according to any one of claims 1 to 15, comprising a fossil-fired steam generator or boiler (2) with a flue gas pipe or flue gas duct carrying the flue gas flow (9a, 9b, 9c, 9d) thereof, which, in a way to be arranged one after the other in the flue gas flow direction, preferably comprises an air preheater (3), an electrostatic filter (4) and a flue gas desulfurization plant (5) operating according to a wet process, as well as a chimney (7) discharging the cleaned flue gas flow, and with pipes supplying the steam generator or boiler (2) with combustion air (11) in the form of heated primary, secondary and/or tertiary air and with a spray dryer (1) evaporating the wastewater (14) of the flue gas desulfurization plant (5), wherein the spray dryer (1) comprises a conduit connection supplying a hot air flow (15) evaporating the wastewater (14) in the spray dryer (1), which is in conduit connection with one or more heat source(s), which provides/provide the amount of thermal energy required to heat the air flow (15) to a temperature sufficient to evaporate the wastewater (14), and wherein the steam power station (8) comprises a solids separator (6) which is in a conduit connection with the spray dryer (1), supplying the air/water gas flow (16) formed in the spray dryer (1) during the evaporation of the wastewater (14) with the supplied hot air flow,
**characterized in that**
the solids separator (6) comprises a conduit connection, leading the air/water gas flow (16a) freed of solids or low in solids thereto, to the combustion air flow (11) supplying combustion air to the burners of the steam generator or boiler (2) and/or a coal mill (19).

17. Steam power station (8) according to claim 16, **characterized in that** the one or more heat source(s) is/are the flue gas flow in the air preheater (3) and/or a duct burner and/or hot gas generator providing and introducing thermal energy into the air flow (15) and/or a heat source providing and/or introducing into the air flow (15) a thermal energy in the form of turbine extraction steam and/or in the form of steam branched off from a water/steam circuit of the steam power station (8) and/or in the form of electric energy.

18. Steam power station (8) according to claim 16 or 17, **characterized in that** the air preheater (3) is configured as a regenerative air preheater, by means of which thermal energy is extracted from the flue gas flow (9a) and fed into the air flow (15) heated thereby.

19. Steam power station (8) according to any one of claims 16 to 18, **characterized in that** the solids separator (6) has a conduit connection, leading the air/water gas flow (16a) freed of solids or low in solids thereto, to the flue gas flow (9a to 9d) with an opening into the flue gas flow (9a to 9d), in particular in the flue gas flow direction upstream of the electrostatic filter (4).

20. Steam power station (8) according to any one of claims 16 to 19, **characterized in that** the solids separator (6) has a conduit connection to the flue gas chimney (7), leading the air/water gas flow (16a) freed of solids or low in solids thereto.

21. Steam power station (8) according to any one of claims 16 to 20, **characterized in that** the solids separator (6) is configured as a centrifugal force and/or gravity separator or electrostatic filter.

22. Steam power station (8) according to any one of claims 16 to 21, **characterized in that** the solids separator (6) has a solids separation efficiency of ≥ 95 %.

## Revendications

1. Procédé pour l'exploitation sans eaux usées d'une installation de désulfuration des gaz de fumée (5) intégrée dans le flux de gaz de fumée (9a-9d) d'un générateur de vapeur ou d'une chaudière (2) à combustible fossile d'une centrale thermique à vapeur (8), fonctionnant selon un procédé humide, dont les eaux usées (14) sont évaporées dans un séchoir par pulvérisation (1) au moyen d'une énergie thermique fournie par un flux de gaz sous la forme d'un flux d'air chaud (15) fourni ayant une température suffisante pour l'évaporation des eaux usées (14), dans lequel le flux de gaz air/eau (16) chargé de solides qui se forme dans le séchoir par pulvérisation (1) est amené à un séparateur de solides (6) en aval du séchoir par pulvérisation (1), où la teneur en solides contenue dans le flux de gaz air/eau (16) est séparée,
**caractérisé en ce que**
le flux de gaz air/eau (16, 16a) est amené au générateur de vapeur ou à la chaudière (2) après avoir quitté le séparateur de matières solides (6).

2. Procédé selon la revendication 1, **caractérisé en ce que** le flux d'air amené (15) est chauffé, de préférence complètement, avant d'entrer dans le séchoir par pulvérisation (1), au moyen d'énergie thermique extraite du flux de gaz de fumée (9a-9d) et introduite dans le flux d'air (15), à la température suffisante pour l'évaporation des eaux usées (14), au moins à un montant partiel de la température suffisante pour l'évaporation des eaux usées (14) .

3. Procédé selon la revendication 1, **caractérisé en ce que** le flux d'air amené (15) est chauffé, de préférence complètement, avant d'entrer dans le séchoir par pulvérisation (1), au moyen d'énergie thermique fournie par un brûleur à conduit et/ou un générateur de gaz chaud et introduite dans le flux d'air (15), à la température suffisante pour l'évaporation des eaux usées (14), au moins à un montant partiel de la température suffisante pour l'évaporation des eaux usées (14).

4. Procédé selon la revendication 1, **caractérisé en ce que** le flux d'air amené (15) est chauffé, de préférence complètement, avant d'entrer dans le séchoir par pulvérisation (1), au moyen de vapeur dérivée sous la forme de vapeur d'extraction de turbine et/ou d'un circuit eau/vapeur de la centrale thermique à vapeur (8) et/ou au moyen d'énergie thermique fournie sous la forme d'énergie électrique et introduite dans le flux d'air (15), à la température suffisante pour l'évaporation des eaux usées (14), au moins à un montant partiel de la température suffisante pour l'évaporation des eaux usées (14).

5. Procédé selon une ou plusieurs des revendications précédentes, **caractérisé en ce que** le flux d'air amené (15) est chauffé, avant d'entrer dans le séchoir par pulvérisation (1), en combinaison d'une ou plusieurs des méthodes suivantes, au moyen d'énergie thermique notamment du préchauffeur d'air (3) extraite du flux de gaz de fumée (9a-9d) et/ou fournie par un brûleur à conduit et/ou un générateur de gaz chaud et/ou sous forme de vapeur d'extraction de turbine et/ou de vapeur dérivée d'un circuit eau/vapeur de la centrale thermique à vapeur (8) et/ou fournie sous forme d'énergie électrique et respectivement introduite dans le flux d'air (15), à la température suffisante pour l'évaporation des eaux usées (14) .

6. Procédé selon l'une quelconque des revendications précédentes, **caractérisé en ce que** le débit massique d'eaux usées (14) amené au séchoir par pulvérisation (1) et le débit massique d'air (15) amené au séchoir par pulvérisation (1) sont adaptés l'un à l'autre de telle sorte qu'une évaporation complète du débit massique d'eaux usées (14) amené soit obtenue.

7. Procédé selon l'une quelconque des revendications 1 à 2 ou 5 à 6, **caractérisé en ce que** le flux d'air chaud (15) amené au séchoir par pulvérisation (1) est chauffé dans le préchauffeur d'air régénératif (3) traversé par le gaz de fumée (9a) à une température suffisante pour l'évaporation des eaux usées (14) dans le séchoir par pulvérisation (1) et est dérivé du flux d'air de combustion (11) de la centrale thermique à vapeur (8) amené aux brûleurs du générateur de vapeur ou de la chaudière (2) et/ou d'au moins un broyeur à charbon (19).

8. Procédé selon l'une quelconque des revendications précédentes, **caractérisé en ce que** le flux d'air chaud (15) amené au séchoir par pulvérisation (1) est dérivé du flux d'air de combustion (11) à amener ou être amené au générateur de vapeur ou à la chaudière (2) en tant qu'air primaire et/ou en tant qu'air secondaire.

9. Procédé selon l'une quelconque des revendications précédentes, **caractérisé en ce que** le flux d'air chaud (15) amené au séchoir par pulvérisation (1) est dérivé au moins partiellement comme flux partiel du flux d'air de combustion (11) à amener ou être amené au générateur de vapeur ou à la chaudière (2) comme air primaire et/ou air secondaire dans le sens du flux d'air de combustion en amont d'un broyeur à charbon (19) associé.

10. Procédé selon l'une quelconque des revendications 1 à 2 ou 5 à 9, **caractérisé en ce que** le flux d'air chaud (15) amené au séchoir par pulvérisation (1) est dérivé au moins partiellement comme flux partiel du flux d'air de combustion (11) à amener ou être amené au générateur de vapeur ou à la chaudière (2) comme air primaire et/ou air secondaire dans la direction d'écoulement de l'air de combustion entre le préchauffeur d'air (3) et le générateur de vapeur ou la chaudière (2).

11. Procédé selon l'une quelconque des revendications précédentes, **caractérisé en ce que** le flux de gaz air/eau (16a), après avoir quitté le séparateur de matières solides (6), est amené au flux d'air de combustion (11) à alimenter ou être alimenté au générateur de vapeur ou à la chaudière (2) en tant qu'air primaire et/ou air secondaire.

12. Procédé selon l'une quelconque des revendications précédentes, **caractérisé en ce que** le flux de gaz air/eau (16a), après avoir quitté le séparateur de matières solides (6), est amené au flux d'air de combustion (11) à alimenter ou être alimenté au générateur de vapeur ou à la chaudière (2) en tant qu'air secondaire et/ou tertiaire.

13. Procédé selon l'une quelconque des revendications précédentes, **caractérisé en ce que** le flux de gaz air/eau (16a), après avoir quitté le séparateur de solides (6), est amené au flux d'air de combustion (11) à alimenter ou être alimenté au générateur de vapeur ou à la chaudière (2) en tant qu'air supérieur ou air de chaudière.

14. Procédé selon l'une quelconque des revendications précédentes, **caractérisé en ce que** le flux de gaz air/eau (16, 16a) se formant dans le séchoir par pulvérisation (1), de préférence après avoir quitté un/le séparateur de matières solides (6), est amené au flux de gaz de fumée (9b), de préférence dans le sens d'écoulement de gaz de fumée en amont d'un filtre électrostatique de gaz de fumée (6) .

15. Procédé selon l'une quelconque des revendications précédentes, **caractérisé en ce que** le flux de gaz air/eau (16a) est amené à une cheminée de gaz de fumée (7) après avoir quitté le séparateur de matières solides (6).

16. Centrale thermique à vapeur (8), notamment pour la réalisation du procédé selon l'une quelconque des revendications 1 à 15, comprenant un générateur de vapeur ou une chaudière (2) à combustible fossile (2) avec un tuyau de gaz de fumée ou un conduit de gaz de fumée portant son flux de gaz de fumée (9a, 9b, 9c, 9d), qui, de manière à être disposé l'un après l'autre dans le sens d'écoulement du gaz de fumée, comprend de préférence un préchauffeur d'air (3), un filtre électrostatique (4) et une installation de désulfuration des gaz de fumée (5) fonctionnant selon un procédé humide ainsi qu'une cheminée (7) évacuant le flux de gaz de fumée épuré, et avec des conduits alimentant le générateur de vapeur ou la chaudière (2) en air de combustion (11) sous la forme d'air primaire, secondaire et/ou tertiaire chauffé et avec un séchoir par pulvérisation (1) évaporant les eaux usées (14) de l'installation de désulfuration des gaz de fumée (5), dans laquelle le séchoir par pulvérisation (1) comprend un raccordement de conduite alimentant un flux d'air chaud (15) qui fait évaporer les eaux usées (14) dans le séchoir par pulvérisation (1), en raccordement de conduite avec une ou plusieurs source(s) de chaleur, qui fournit/fournissent la quantité d'énergie thermique nécessaire pour chauffer le flux d'air (15) à une température suffisante pour évaporer les eaux usées, et dans laquelle la centrale thermique à vapeur (8) comporte un séparateur de matières solides (6) qui est en raccordement de conduite avec le séchoir par pulvérisation (1) alimentant le flux de gaz air/eau (16) formé dans le séchoir par pulvérisation (1) pendant l'évaporation des eaux usées (14) avec le flux d'air chaud fourni,
**caractérisée en ce que**
le séparateur de matières solides (6) comporte un raccordement de conduite vers le flux d'air de combustion (11) qui alimente en air de combustion les brûleurs du générateur de vapeur ou de la chaudière (2) et/ou un broyeur à charbon (19), y conduisant le flux de gaz air/eau (16a), débarrassé de matières solides ou ayant une faible teneur en matières solides.

17. Centrale thermique à vapeur (8) selon la revendication 16, **caractérisée en ce que** ladite une ou lesdites plusieurs sources de chaleur est/sont le flux de gaz de fumée dans le préchauffeur d'air (3) et/ou un brûleur à conduit et/ou un générateur de gaz chaud fournissant et introduisant de l'énergie thermique dans le flux d'air (15) et/ou une source de chaleur fournissant et introduisant dans le flux d'air (15) de l'énergie thermique sous la forme de vapeur d'extraction de turbine et/ou sous la forme de vapeur dérivée d'un circuit eau/vapeur de la centrale thermique à vapeur (8) et/ou sous la forme d'énergie électrique.

18. Centrale thermique à vapeur (8) selon la revendication 16 ou 17, **caractérisée en ce que** le préchauffeur d'air (3) est conçu comme un préchauffeur d'air régénératif, au moyen duquel de l'énergie thermique est extraite du flux de gaz de fumée (9a) et introduite dans le flux d'air (15) qu'elle chauffe.

19. Centrale thermique à vapeur (8) selon l'une quelconque des revendications 16 à 18, **caractérisée en ce que** le séparateur de matières solides (6) présente un raccordement de conduite au flux de gaz de fumée (9a-9d) avec une ouverture dans le flux de gaz de fumée (9a-9d), en particulier dans le sens d'écoulement des gaz de fumée en amont du filtre électrostatique (4), y conduisant le flux de gaz air/eau (16a) débarrassé de matières solides ou ayant une faible teneur en matières solides.

20. Centrale thermique à vapeur (8) selon l'une quelconque des revendications 16 à 19, **caractérisée en ce que** le séparateur de matières solides (6) comprend un raccordement de conduite à la cheminée de gaz de fumée (7), y conduisant le flux de gaz air/eau (16a) débarrassé de matières solides ou ayant une faible teneur en matières solides.

21. Centrale thermique à vapeur (8) selon l'une quelconque des revendications 16 à 20, **caractérisée en ce que** le séparateur de matières solides (6) est conçu comme séparateur à cyclone et/ou de gravité ou filtre électrostatique.

22. Centrale thermique à vapeur (8) selon l'une quelconque des revendications 16 à 21, **caractérisée en ce que** le séparateur de matières solides (6) présente une efficacité de séparation de matières solides de ≥ 95 %.
